(19) **Europäisches Patentamt European Patent Office Office européen des brevets**

(11) **EP 4 464 410 B1**

(12) **EUROPEAN PATENT SPECIFICATION**

(45) Date of publication and mention of the grant of the patent:
**18.03.2026 Bulletin 2026/12**

(21) Application number: **23752725.4**

(22) Date of filing: **30.01.2023**

(51) International Patent Classification (IPC):
*B01J 20/10* (2006.01)    *B01J 20/08* (2006.01)
*B01J 20/04* (2006.01)    *C04B 28/02* (2006.01)
*C04B 20/02* (2006.01)    *C04B 7/345* (2006.01)
*C04B 111/00* (2006.01)

(52) Cooperative Patent Classification (CPC):
(C-Sets available)
**B01J 20/10; B01J 20/041; B01J 20/08;**
**C04B 7/3453; C04B 20/023; C04B 28/025;**
C04B 2111/00215                    (Cont.)

(86) International application number:
**PCT/JP2023/002893**

(87) International publication number:
**WO 2023/153260 (17.08.2023 Gazette 2023/33)**

(54) **CO2 FIXATION CERAMIC AND METHOD FOR PRODUCING CO2 FIXATION PRODUCT**

CO2-FIXIERKERAMIK UND VERFAHREN ZUR HERSTELLUNG EINES CO2-FIXIERPRODUKTS

CÉRAMIQUE DE FIXATION DE CO2 ET PROCÉDÉ DE PRODUCTION DE PRODUIT DE FIXATION DE CO2

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.02.2022 JP 2022019300**

(43) Date of publication of application:
**20.11.2024 Bulletin 2024/47**

(73) Proprietor: **Denka Company Limited Tokyo 103-8338 (JP)**

(72) Inventors:
• **YASUDA Ryosuke Tokyo 103-8338 (JP)**
• **MORI Taiichiro Tokyo 103-8338 (JP)**

(74) Representative: **Gulde & Partner Patent- und Rechtsanwaltskanzlei mbB Berliner Freiheit 2 10785 Berlin (DE)**

(56) References cited:
EP-B1- 3 177 578        WO-A1-2021/257757
JP-A- 2004 340 774      JP-A- 2007 008 749
JP-A- 2011 168 436      JP-A- 2019 058 091
JP-A- 2019 058 091      JP-A- 2022 036 364

(52) Cooperative Patent Classification (CPC): (Cont.)

C-Sets
**C04B 20/023, C04B 7/3453;**
**C04B 28/025, C04B 24/10, C04B 40/0231**

**Description**

TECHNICAL FIELD

The present invention relates to a $CO_2$-fixing ceramic and a method for producing a $CO_2$-fixed material.

BACKGROUND ART

As an approach to reducing greenhouse gases, concrete products in which $CO_2$ is forcibly absorbed or carbonated during production (hereinafter, $CO_2$ absorption concrete) have been put into practical use partially. The $CO_2$ absorption concrete, which is one of a carbon dioxide capture, utilization and storage (abbreviated as CCUS) technologies, is also mentioned in "Carbon Recycling Technology Roadmap" announced by the Ministry of Economy, Trade and Industry in 2019, and the technology development is carried out for the purpose of popularization and expansion.

JP 2020-15659 A discloses a method of forcibly absorbing or carbonating $CO_2$ during production of a concrete. Specifically, a method of fixing carbon dioxide, including a contact step of bringing a cementitious cured body into contact with a carbon dioxide-containing gas to fix carbon dioxide contained in the carbon dioxide-containing gas to the cementitious cured body, is disclosed.

The cementitious cured body of JP 2020-15659 A is obtained by filling a mold frame with a cement paste which is obtained by mixing early-strength Portland cement and water, and curing with water (paragraph 0019 of JP 2020-15659 A).

JP 2019 058091 A discloses a cementitious material comprising carbonatable cement phases.

WO 2021/257757 A1 discloses a cement comprising carbonatable calcium silicate cement phases.

EP 3 177 578 B1 discloses a cement comprising carbonatable calcium silicate cement phases.

SUMMARY OF THE INVENTION

TECHNICAL PROBLEM

An object of the present invention is to provide a $CO_2$-fixing ceramic in which $CO_2$ can be fixed by carbonation, and a method for producing a $CO_2$-fixed material using the same.

SOLUTION TO PROBLEM

The present inventor has found that the $CO_2$-fixing ceramic in which $CO_2$ can be fixed by carbonation can be realized by using a ceramic containing $\gamma$-$2CaO \cdot SiO_2$ and $2CaO \cdot Al_2O_3 \cdot SiO_2$, and has completed the present invention.

According to one aspect of the present invention, there are provided the following $CO_2$-fixing ceramic and the following method for producing a $CO_2$-fixed material.

The invention provides a $CO_2$-fixing ceramic containing:

a $\gamma$-crystalline phase composed of $\gamma$-$2CaO \cdot SiO_2$ ($\gamma$-$C_2S$); and
$2CaO \cdot Al_2O_3 \cdot SiO_2$ ($C_2AS$),
wherein a content of the $\gamma$-$C_2S$ in 100% by mass of the $CO_2$-fixing ceramic is equal to or more than 30% by mass and equal to or less than 98% by mass, and
wherein a content of the $C_2AS$ is equal to or more than 0.5% by mass and equal to or less than 50% by mass with respect to 100% by mass of the $\gamma$-$C_2S$.

According to an embodiment, the $CO_2$-fixing ceramic further contains $CaO \cdot 2Al_2O_3$ ($CA_2$).

According to an embodiment, the $CO_2$-fixing ceramic contains a heterophase existing in the $\gamma$-crystalline phase, and the $C_2AS$ is contained in the heterophase.

According to an embodiment, $Al_2O_3$ is not contained in the $\gamma$-crystalline phase.

According to an embodiment, the $CO_2$-fixing ceramic further contains a $\beta$-crystalline phase composed of $\beta$-$2CaO \cdot SiO_2$ ($\beta$-$C_2S$).

According to an embodiment, $Al_2O_3$ is contained in the $\beta$-crystalline phase.

According to an embodiment, a content of the $\beta$-$C_2S$ is equal to or more than 1.0% by mass and equal to or less than 50% by mass with respect to 100% by mass of the $\gamma$-$C_2S$.

According to an embodiment, the $CO_2$-fixing ceramic further contains disaccharides.

According to an embodiment, a content of the disaccharides in 100 parts by mass of the $CO_2$-fixing ceramic is

equal to or more than 0.5 parts by mass and equal to or less than 10 parts by mass.

According to an embodiment, the disaccharides include trehalose.

According to an embodiment, the $CO_2$-fixing ceramic is in a powder form.

The invention further provides a method for producing a $CO_2$-fixed material, including:

a step of performing a carbonation treatment of the $CO_2$-fixing ceramic according to the present invention under a condition of lower than 75°C and/or equal to or more than 50 %RH.

ADVANTAGEOUS EFFECTS OF INVENTION

According to the present invention, there are provided a $CO_2$-fixing ceramic having excellent $CO_2$ fixation ability, and a method for producing a $CO_2$-fixed material using the same.

BRIEF DESCRIPTION OF THE DRAWINGS

Fig. 1 is an SEM image of a fixing ceramic A.
Fig. 2 is an SEM image of a fixing ceramic B.

DESCRIPTION OF EMBODIMENTS

An outline of the $CO_2$-fixing ceramic according to the present embodiment will be described.

The $CO_2$-fixing ceramic according to the present embodiment contains a $\gamma$-crystalline phase composed of $\gamma$-$2CaO \cdot SiO_2$ (hereinafter, also abbreviated as $\gamma$-$C_2S$), and $2CaO \cdot Al_2O_3 \cdot SiO_2$ (hereinafter, also abbreviated as $C_2AS$).

According to the findings of the present inventor, it has been found that $CO_2$ can be fixed in a relatively short period of time by using a $CO_2$-fixing ceramic containing $\gamma$-$C_2S$ and $C_2AS$.

The detailed mechanism is not certain, but in a case where powder having favorable reactivity with $CO_2$, such as the $\gamma$-$C_2S$, is subjected to carbonation curing, the powder is formed into a lump, and the entry of $CO_2$ is blocked, so that the reaction stagnates. On the other hand, it is considered that the moderate presence of $C_2AS$, which is a stable phase, prevents the powder from becoming excessively dense clumps, allowing CO2 to invade the interior of the powder and the reaction to proceed.

According to the present embodiment, it is possible to provide a $CO_2$-fixing ceramic in which $CO_2$ can be fixed by carbonation.

According to the $CO_2$-fixing ceramic of the present embodiment, the $CO_2$ fixation can be promoted by the carbonation treatment under relatively low temperature and/or relatively high humidity conditions, such as lower than 75°C and/or equal to or more than 50 %RH.

The $CO_2$-fixing ceramic according to the present embodiment can be used for various applications, for example, as a trap material which adsorbs $CO_2$ gas discharged from an industrial facility, a power generation facility, a transport vehicle including an automobile, and the like; as a chemical heat storage material which stores waste heat in a factory and regenerative energy, the amount of power generation of which varies depending on weather; and as a $CO_2$ absorbent which absorbs $CO_2$ in exhalation to enable safe anesthesia or accurate testing with medical devices. In addition, the $CO_2$-fixing ceramic can also be used as a cement additive (mixing material).

[Method for producing $CO_2$-fixed material]

An example of a method for producing a $CO_2$-fixed material according to the present embodiment includes a step of performing a carbonation treatment of the $CO_2$-fixing ceramic at equal to or lower than 75°C and/or equal to or more than 50 %RH.

The method of the carbonation treatment is not particularly limited, and examples thereof include a method of appropriately heating and/or humidifying (adding water) the $CO_2$-fixing ceramic in a $CO_2$-containing gas atmosphere to satisfy predetermined temperature and humidity conditions.

The temperature of the carbonation treatment is, for example, preferably 5°C or higher and lower than 75°C and more preferably 5°C or higher and 50°C or lower.

In addition, the relative humidity of the carbonization treatment is preferably equal to or more than 50 %RH and equal to or less than 100 %RH and more preferably equal to or more than 80 %RH and equal to or less than 100 %RH.

As the above-described $CO_2$-containing gas, exhaust gas generated from a cement factory and a coal-fired power plant, exhaust gas generated in exhaust treatment in a painting factory, or the like can be used. A proportion of $CO_2$ in the $CO_2$-containing gas is preferably equal to or more than 5% by volume, more preferably equal to or more than 10% by volume, and still more preferably equal to or more than 15% by volume.

In addition, the $CO_2$-containing gas may contain moisture (water vapor).

The $CO_2$-fixing ceramic according to the present embodiment can effectively fix $CO_2$ in the air and can be further effectively used as a concrete material. That is, the $CO_2$-fixed material can be used, for example, as a cement additive (mixing material), and can be used as it is as a material such as an aggregate for mortar or concrete, a roadbed material, an embankment material, and a backfill material. In addition, the $CO_2$-fixed material can be used as a filler increasing material for a coating material, an ink, or rubber.

Hereinafter, the $CO_2$-fixing ceramic according to the present embodiment will be described in detail.

The $CO_2$-fixing ceramic contains an inorganic baked product containing the $\gamma$-$C_2S$ and the $C_2AS$. The inorganic baked product means a molded product or a powder product having a predetermined shape, which is obtained by heating and baking an inorganic raw material.

In addition, the $CO_2$-fixing ceramic may be configured in a powder form.

For example, by appropriately controlling a $CaO/SiO_2$ molar ratio according to a content of $Al_2O_3$ contained in an inorganic raw material, it is possible to obtain a $CO_2$-fixing ceramic entirely powdered.

In addition, the $CO_2$-fixing ceramic may contain an organic substance such as disaccharides described later, in addition to the inorganic substance such as the inorganic baked product. The $CO_2$-fixing ceramic containing the organic substance can be obtained, for example, by mixing a powdery inorganic baked substance and disaccharides.

Crystal types of the $\gamma$-$C_2S$, such as an $\alpha$-type, a $\beta$-type, and a $\gamma$-type, have been known. These have different crystal structures and densities from each other. Among these, $\gamma$-$C_2S$ which is a $\gamma$-type exhibits an effect of inhibiting neutralization. By performing forced carbonation, densification in the cured cement product with the $\gamma$-$C_2S$ can be increased.

The $\gamma$-$C_2S$ constitutes the $\gamma$-crystalline phase of the $CO_2$-fixing ceramic. The $\gamma$-crystalline phase may be contained in the $CO_2$-fixing ceramic as an inorganic matrix.

A lower limit of a content of the $\gamma$-$C_2S$ is equal to or more than 30 parts by mass, preferably equal to or more than 35 parts by mass and more preferably equal to or more than 40 parts by mass in 100 parts by mass of the $CO_2$-fixing ceramic.

On the other hand, an upper limit of the content of the $\gamma$-$C_2S$ is equal to or less than 98 parts by mass, preferably equal to or less than 95 parts by mass and more preferably equal to or less than 93 parts by mass in 100 parts by mass of the $CO_2$-fixing ceramic.

By setting the content in such a range, a carbonation rate can be improved.

The $CO_2$-fixing ceramic may contain a heterophase existing in the $\gamma$-crystalline phase.

In at least one of SEM images of a fracture surface of the $CO_2$-fixing ceramic, the heterophase is present in the interior of a crystal grain of a crystal substance constituting the $\gamma$-crystalline phase consisting of the $\gamma$-$C_2S$ or present along an interface of the crystal grain.

In the SEM images, the heterophase may be included in one or two or more in the crystal grain.

As a component constituting the heterophase, it is preferable that the $CO_2$-fixing ceramic contains the $C_2AS$. As a result, the carbonation rate can be further improved.

In the heterophase, a component other than the $C_2AS$ may be present unavoidably.

A lower limit of a content of the $C_2AS$ is equal to or more than 0.5% by mass, preferably equal to or more than 1.0% by mass and more preferably equal to or more than 2.0% by mass with respect to 100% by mass of the $\gamma$-$C_2S$. As a result, $CO_2$ can be fixed in a short period of time.

On the other hand, an upper limit of the content of the $C_2AS$ is equal to or less than 50% by mass, preferably equal to or less than 40% by mass and more preferably equal to or less than 30% by mass with respect to 100% by mass of the $\gamma$-$C_2S$. As a result, it is possible to avoid an excessive decrease in carbonation rate.

In the present embodiment, for example, by appropriately selecting the type and blending amount of each component contained in the $CO_2$-fixing ceramic, the method of preparing the $CO_2$-fixing ceramic, and the like, it is possible to control the presence of the above-described heterophase or the content of the component constituting the heterophase. Among these, examples of an element for obtaining the desired state of the presence of the above-described heterophase and the content of the component constituting the heterophase include using a raw material mixture containing a CaO raw material, an $SiO_2$ raw material, and an $Al_2O_3$ raw material, using a rotary kiln lined with a high-purity alumina brick and/or applying an alumina mortar having a predetermined concentration onto a brick surface inside the kiln, and appropriately adjusting the baking temperature, the dry pulverization, and the granule size.

A content of each mineral composition in the $CO_2$-fixing ceramic can be confirmed by a general analysis method. For example, a pulverized sample is subjected to a powder X-ray diffractometry to confirm the produced mineral composition and the data is analyzed by a Rietveld refinement, whereby the mineral composition can be quantified. In addition, the mineral composition amount can also be obtained by a calculation based on a chemical component and the identification result of the powder X-ray diffraction.

The $CO_2$-fixing ceramic may be configured such that $Al_2O_3$ is not contained in the $\gamma$-crystalline phase. As a result, the carbonation rate can be improved.

The $CO_2$-fixing ceramic may be configured to contain a β-crystalline phase composed of β-2CaO·SiO₂ (hereinafter, also referred to as β-$C_2S$).

A lower limit of a content of the β-$C_2S$ is, for example, equal to or more than 1.0% by mass, preferably equal to or more than 2.0% by mass and more preferably equal to or more than 3.0% by mass with respect to 100% by mass of the γ-$C_2S$. As a result, $CO_2$ can be fixed in a short period of time.

On the other hand, an upper limit of the content of the β-$C_2S$ is, for example, equal to or less than 50% by mass, preferably equal to or less than 30% by mass and more preferably equal to or less than 20% by mass with respect to 100% by mass of the γ-$C_2S$. As a result, it is possible to avoid a decrease in carbonation rate due to the progress of the hydration reaction and the formation of a dense mass.

The $CO_2$-fixing ceramic containing the β-$C_2S$ may be configured such that $Al_2O_3$ is contained in the β-crystalline phase.

The $CO_2$-fixing ceramic may contain CaO·2Al₂O₃ (hereinafter, also abbreviated as $CA_2$).

A lower limit of a content of the $CA_2$ is, for example, equal to or more than 0.01% by mass, preferably equal to or more than 0.05% by mass and more preferably equal to or more than 0.1% by mass with respect to 100% by mass of the γ-$C_2S$. As a result, it is possible to obtain a $CO_2$-fixing ceramic entirely powdered.

On the other hand, an upper limit of the content of the $CA_2$ is, for example, equal to or less than 20% by mass, preferably equal to or less than 18% by mass and more preferably equal to or less than 15% by mass with respect to 100% by mass of the γ-$C_2S$. As a result, it is possible to obtain a $CO_2$-fixing ceramic entirely powdered.

A moisture content of the $CO_2$-fixing ceramic is, for example, preferably equal to or less than 10% by mass and more preferably 0.01% to 10% by mass. As a result, it is possible to appropriately maintain the contact between the $CO_2$-fixing ceramic surface and the $CO_2$-containing gas.

The moisture content can be obtained from a difference between a mass of a sample before drying and a mass of the sample after being heated and dried at 105°C. In addition, the moisture content of the $CO_2$-fixing ceramic can be adjusted by heating and drying at 105°C, and then adding an appropriate amount of water and stirring.

An average particle diameter of the $CO_2$-fixing ceramic is, for example, preferably 1 to 100 μm and more preferably 1 to 70 μm. In a case where the average particle diameter is 1 to 70 μm, elution of Ca into the water on the particle surface can be promoted, and the carbonation reaction can be promoted. The average particle diameter can be obtained by measuring with a laser diffraction/scattering-type particle size distribution analyzer.

In addition, a Blaine specific surface area of the $CO_2$-fixing ceramic is, for example, preferably 1,000 to 10,000 cm²/g and more preferably 2,500 to 10,000 cm²/g. In a case where the specific surface area is 2,500 to 10,000 cm²/g, a contact area between the particles and the water on the surface of the particles is increased, and the elution of Ca is promoted, so that the carbonation reaction can be promoted.

The Blaine surface area can be measured and obtained by a Blaine air permeation device described in JIS R 5201.

In the present specification, the fixation of $CO_2$ means that a material is carbonated to form a carbonate compound of $CO_2$ and the material.

In the present embodiment, in a case where the $CO_2$-fixing ceramic comes into contact with $CO_2$, the $CO_2$-fixing ceramic can form a carbonate compound by carbonation, and thus the carbonate compound can be formed (fixed) on the inside and/or the surface of the $CO_2$-fixing ceramic. The $CO_2$-fixed material is obtained by fixing $CO_2$ to the $CO_2$-fixing ceramic as the carbonate compound.

In addition, the carbonation of such a $CO_2$-fixing ceramic can be promoted by a predetermined carbonation treatment.

As the carbonation treatment, a condition of relatively low temperature and/or relatively high humidity can be adopted, but for example, a condition of lower than 75°C and/or equal to or more than 50 %RH may be adopted. Not only in the high temperature but also in a relatively low-temperature condition, the $CO_2$ can be fixed to the $CO_2$-fixing ceramic according to the present embodiment by the carbonation treatment.

In the present specification, the carbonation rate is a proportion of a CaO component in the $CO_2$-fixing ceramic to $CO_2$ to be theoretically fixed. The carbonation rate can be calculated from the following expression.

Carbonation rate = $(\Delta M \times 56.08)/(M \times wCaO \times 44.01)$          Expression (1):

In the expression (1), $\Delta M$ represents an increase mass [g] due to carbonation, M represents a mass [g] of the $CO_2$-fixing ceramic before carbonation, and wCaO represents CaO [wt%] in the $CO_2$-fixing ceramic before carbonation.

In the expression (1), the increase mass due to carbonation refers to a mass obtained by subtracting the weight of the sample after the carbonation from the weight of the sample before the carbonation. The CaO in the $CO_2$-fixing ceramic before carbonation can be measured by fluorescent X-ray analysis.

A method for producing the $CO_2$-fixing ceramic will be described.

An example of the method for producing the $CO_2$-fixing ceramic includes a step of, for example, baking a raw material mixture containing a CaO raw material, an $SiO_2$ raw material, and an $Al_2O_3$ raw material using a kiln.

As the CaO raw material, a commercially available material as an industrial raw material may be used, and for example, one or two or more selected from the group consisting of limestone, coal ash, quicklime, slaked lime, and acetylene waste may be contained. Among these, slaked lime or by-product slaked lime may be used.

As the $SiO_2$ raw material, a commercially available material as an industrial raw material may be used, and examples thereof include silicon stone, silica sand, quartz, and diatomaceous earth. These may be used alone or in combination of two or more kinds thereof. These may be not used as long as the CaO raw material or the $Al_2O_3$ raw material contains a required amount of $SiO_2$.

For example, in a case where coal ash containing $SiO_2$ is used as the CaO raw material, the above-described $SiO_2$ raw material may not be added.

Here, the coal ash (fly ash and the like) is a general term for, for example, coal combustion ash and the like, which are obtained by burning coal discharged from a boiler of a thermal power plant. The coal ash is, for example, ash generated from a coal-fired power plant, and coal ash generated by combustion of fine powder coal and collected by falling from a combustion gas of a combustion boiler as it passes through an air preheater, an economizer, or the like; coal ash collected by an electrostatic precipitator; coal ash falling to the bottom of the combustion boiler; or the like can be used.

As the $Al_2O_3$ raw material, a commercially available material as an industrial raw material may be used, but for example, one or two or more selected from the group consisting of bauxite, aluminum hydroxide, and aluminum residual ash may be used. The aluminum residual ash may be mainly composed of aluminum hydroxide. Among these, bauxite may be used.

These raw materials are mixed and pulverized after being formulated to have a predetermined mineral composition proportion after the baking, thereby obtaining a raw material mixture.

The method of the mixing and pulverization is not particularly limited, and a dry pulverization method or a wet pulverization method can be applied. In a case of the wet pulverization method, it is necessary to perform a dehydration treatment in order to granulate the raw material mixture. In addition, in a case where quicklime is used as the raw material, it is desirable to perform the treatment in a dry state.

In addition, a $\gamma$-$C_2S$/$C_2AS$ ratio in the $CO_2$-fixing ceramic can be controlled by adjusting a charging proportion of the raw materials.

The raw material mixture may be granulated before the baking. The granules are adjusted to an appropriate size, for example, may be 0.5 to 3.0 cm.

The baking temperature may be, for example, 1,200°C to 1,600°C, and is preferably 1,300°C to 1,550°C and more preferably 1,400°C to 1,450°C.

A kiln such as a rotary kiln can be used for the baking.

For example, a rotary kiln in which bricks of a baking band are formed of high-purity alumina bricks having an $Al_2O_3$ content of equal to or more than 99% based on mass may be used, and/or an alumina mortar adjusted to an appropriate concentration may be applied to an inner surface of the bricks of the baking band in the rotary kiln before the baking.

The $CO_2$-fixing ceramic may be obtained as an inorganic baked product (clinker) by baking an inorganic raw material, or may be obtained as a powdery inorganic baked product by pulverizing the clinker.

The $CO_2$-fixing ceramic may further contain disaccharides as other organic components, in addition to the inorganic baked product containing the above-described inorganic components such as the $\gamma$-$C_2S$ and the $C_2AS$. In a case where the disaccharides are contained, Ca eluted from the surface water of the inorganic baked product can be further chelated to promote further elution.

The $CO_2$-fixing ceramic preferably contains, for example, one or two or more disaccharides selected from the group consisting of trehalose, maltose, and sucrose. Among these, it is more preferable to contain trehalose which has a high effect of promoting the carbonation reaction.

From the viewpoint of the promoting effect of the carbonation reaction, the $CO_2$-fixing ceramic contains the disaccharides in an amount of preferably 0.5 to 10 parts by mass and more preferably 5 to 10 parts by mass with respect to 100 parts by mass of the $CO_2$-fixing ceramic. In addition, in order to obtain a sufficient effect of promoting the carbonation, a content of trehalose in the disaccharides is preferably equal to or more than 90% by mass and more preferably equal to or more than 95% by mass in 100% by mass of the disaccharides.

The embodiments of the present invention have been described above, but these are examples of the present invention and various configurations other than the above can be adopted. In addition, the present invention is not limited to the above-described embodiments, and modifications, improvements, and the like within the range in which the object of the present invention can be achieved are included in the present invention. Examples

Hereinafter, the present invention will be described in detail with reference to Examples, but the present invention is not limited to the description of Examples.

<Production of $CO_2$-fixing ceramic>

(Raw material used)

· By-product slaked lime: slaked lime which was a by-product after generating acetylene by reacting calcium carbide with water; $SiO_2$ was 0.8% by mass, $Al_2O_3$ was 0.6% by mass, $Fe_2O_3$ was 0.3% by mass, CaO was 68.5% by mass, MgO was 0.02% by mass, $Na_2O$ was 0.01% by mass, $K_2O$ was 0.01% by mass, and $SO_3$ was 0.5% by mass; a loss on ignition (L.O.I.) was 24.1% by mass.
· Silicastone: silicastone fine powder; $SiO_2$ was 99.3% by mass, $Al_2O_3$ was 0.01% by mass, $Fe_2O_3$ was 0.0% by mass, CaO was 0.0% by mass, MgO was 0.04% by mass, $Na_2O$ was 0.02% by mass, $K_2O$ was 0.3% by mass, and $SO_3$ was 0.04% by mass; a loss on ignition (L.O.I.) was 0.6% by mass.
· Alumina: $Al_2O_3$ was 99.03% by mass, $SiO_2$ was 0.14% by mass, $Fe_2O_3$ was less than 0.01% by mass, CaO was less than 0.01% by mass, and $TiO_2$ was 0.06% by mass; a loss on ignition (L.O.I.) was 0.82% by mass.

[Experimental Example 1]

(Fixing ceramic A)

As a raw material containing CaO and $SiO_2$, the by-product slaked lime and the silicastone described above were blended to have a $CaO/SiO_2$ molar ratio shown in Table 1, and the mixture was dry-mixed and pulverized to obtain a mixed raw material. The obtained mixed raw material was granulated to produce granules having a diameter of approximately 1 cm to 2.5 cm.

The obtained granules were put into a rotary kiln including bricks of a baking band made of high-purity alumina brick ($Al_2O_3$ content was equal to or more than 99% based on mass), and baked at a baking temperature of 1,400°C to synthesize a clinker pulverized in a process of cooling to room temperature. The obtained clinker powder product was used as a $CO_2$-fixing ceramic A.

The $CO_2$-fixing ceramic may be simply referred to as "fixing ceramic".

(Fixing ceramics B and C)

Clinker powder products having the mineral proportions shown in Table 1 were synthesized in the same manner as in the fixing ceramic A, and were used as a $CO_2$-fixing ceramic B and a $CO_2$-fixing ceramic C, except that the above-described alumina was used instead of the silicastone, and the $CaO/SiO_2$ molar ratio and the $Al_2O_3$ content shown in Table 1 were adopted.

(Fixing ceramic D)

A calcium carbonate-based powder having a purity of equal to or more than 99.0% by mass and a silicon oxide-based powder having a purity of equal to or more than 99.0% by mass were mixed with each other such that a molar ratio of $CaO/SiO_2$ was 2.0, and the mixture was heat-treated at 1,400°C for 2 hours and slowly cooled in an electric furnace to synthesize a $\gamma$-$C_2S$ powder. The obtained $\gamma$-$C_2S$ powder was used as a $CO_2$-fixing ceramic D.

In the $\gamma$-$C_2S$ powder obtained here, $C_2AS$ and $C_{12}A_7$ were not contained as solid solutions.

As a result of performing an elemental surface analysis using the obtained SEM image and an energy-dispersive X-ray spectrometer (EDS), it was found that, in the fixing ceramics A to C, $C_2AS$ was present in the $\gamma$-crystalline phase formed by $\gamma$-$C_2S$, and $Al_2O_3$ was not contained in the $\gamma$-crystalline phase. In addition, in the $CO_2$-fixing ceramic of the fixing ceramics A to C, $\beta$-$C_2S$ was confirmed, and it was found that $Al_2O_3$ was contained in the $\beta$-crystalline phase formed by the $\beta$-$C_2S$.

In addition, as a result of observing a fracture surface of the obtained clinker powder of the fixing ceramics A to C using SEM, it was found that $C_2AS$ was present in the $\gamma$-crystalline phase formed by $\gamma$-$C_2S$.

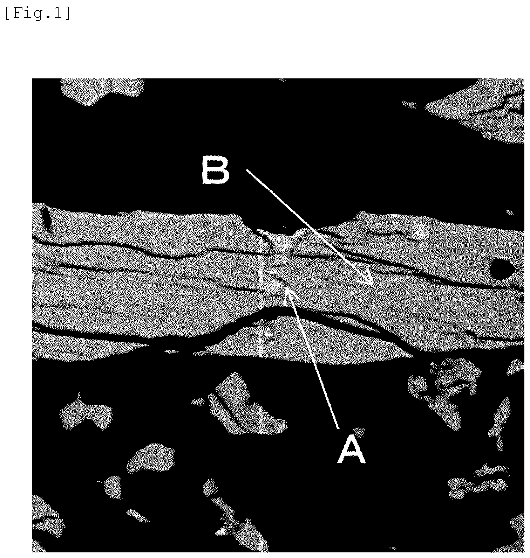

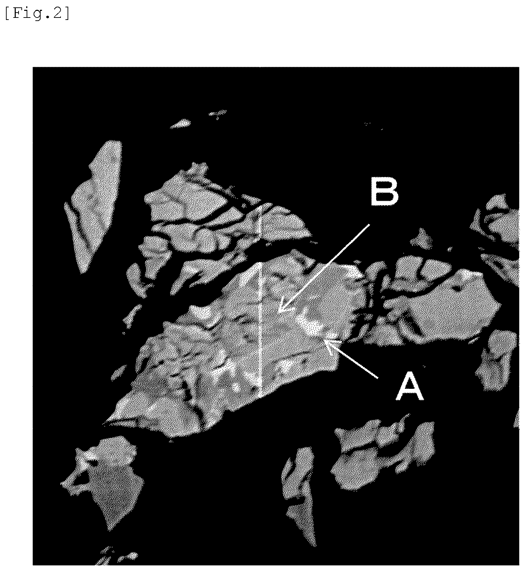

Fig. 1 shows an SEM image of the fracture surface of the clinker of the fixing ceramic A, and Fig. 2 shows an SEM image of the fracture surface of the clinker of the fixing ceramic B. In Figs. 1 and 2, an arrow A (white region) indicates the $C_2AS$, and an arrow B (gray region) indicates the $\gamma$-$C_2S$.

[Calculation of carbonation rate]

25 g of each of the obtained fixing ceramics A to D was put in a polycup, and a carbonation treatment was carried out in a constant temperature and humidity room under conditions of 20°C, 80 %RH, and a $CO_2$ concentration of 20% by volume.

The mass of the sample which was carbonated in each of predetermined periods (1 day, 3 days, and 7 days) shown in Table 1 and then dried at 105°C for 24 hours was measured, and the carbonation rate was calculated based on the mass change before and after the carbonation treatment according to the following expression (1). The results are shown in Table 1.

Carbonation rate = $(\Delta M \times 56.08)/(M \times wCaO \times 44.01)$ Expression (1):

In the expression (1), $\Delta M$ represents an increase mass [g] due to carbonation treatment, M represents a mass [g] of the fixing ceramic before carbonation, and wCaO represents a content [wt%] of CaO in the fixing ceramic before carbonation. The increase mass due to carbonation treatment refers to a mass obtained by subtracting the weight of the sample after the carbonation treatment from the weight of the sample before the carbonation treatment. The content of CaO in the $CO_2$-fixing ceramic before carbonation treatment was measured by fluorescent X-ray analysis.

[Table 1]

Table 1

| | Mineral composition (% by mass) | | | | In mixed raw material | | Blaine specific surface area ($cm^2$/g) | Carbonation rate [%] | | | Note |
|---|---|---|---|---|---|---|---|---|---|---|---|
| | $\gamma$-$C_2S$ | $\beta$-$C_2S$ | $C_2AS$ | Total | $CaO/SiO_2$ molar ratio | $Al_2O_3$ content (% by mass) | | 1 day | 3 days | 7 days | |
| Fixing ceramic A | 92.0 | 2.5 | 5.5 | 100 | 1.9 | 1 | 3500 | 23.2 | 46.6 | 50.4 | Example 1 |
| Fixing ceramic B | 54.2 | 21.1 | 24.7 | 100 | 2.1 | 10 | 3500 | 18.7 | 41.0 | 44.5 | Example 2 |
| Fixing ceramic C | 76.2 | 7.7 | 16.1 | 100 | 2.2 | 10 | 3500 | 21.5 | 42.9 | 47.7 | Example 3 |
| Fixing ceramic D | 100 | 0 | 0 | 100 | 2.0 | 0 | 3500 | 10.5 | 30.1 | 30.7 | Comparative Example 1 |

In Table 1, $\gamma$-$C_2S$ represents $\gamma$-$2CaO \cdot SiO_2$, $\beta$-$C_2S$ represents $\beta$-$2CaO \cdot SiO_2$, and $C_2AS$ represents $2CaO \cdot Al_2O_3 \cdot SiO_2$.

In Table 1, the proportion of the mineral composition was calculated based on the result of the quantitative analysis of the chemical composition using fluorescent X-ray and the identification result by the powder X-ray diffraction.

[Experimental Example 2]

Various aids were added to 100 parts by mass of the $CO_2$-fixing ceramic A with predetermined proportions shown in Table 2, and mixed to obtain a $CO_2$-fixing ceramic E.

The obtained $CO_2$-fixing ceramic E was subjected to a carbonation treatment in the same manner as in Experimental Example 1, and the carbonation rate was calculated. The results are shown in Table 2.

[Table 2]

Table 2

| Fixing ceramic E | Aid | | Carbonation rate [%] | | Note |
|---|---|---|---|---|---|
| | Type | Addition amount (part by mass) | 1 day | 3 days | |
| 100 parts by mass of fixing ceramic A | None | 0 | 23.2 | 46.6 | Example 1 |
| | Trehalose | 1 | 50.2 | 66.3 | Example 4 |
| | Trehalose | 5 | 63.1 | 74.4 | Example 5 |
| | Sucrose | 1 | 43.5 | 61.2 | Example 6 |
| | Sucrose | 5 | 45.2 | 64.1 | Example 7 |
| | Maltose | 1 | 41.8 | 60.8 | Example 8 |
| | Maltose | 5 | 43.7 | 63.3 | Example 9 |
| | Dextrin | 1 | 42.2 | 59.9 | Example 10 |
| | Dextrin | 5 | 44.4 | 61.3 | Example 11 |

[Experimental Example 3]

The carbonation treatment was performed in the same manner as in Experimental Example 1, and the carbonation rate was calculated, except that the $CO_2$-fixing ceramic A was used, and the conditions of the carbonation treatment in the constant temperature and humidity room were changed to conditions shown in Table 3. The results are shown in Table 3.

[Table 3]

Table 3

| | Carbonation treatment condition | Carbonation rate [%] | | | Note |
|---|---|---|---|---|---|
| | | 1 day | 3 days | 7 days | |
| Fixing ceramic A | 20°C, 80% RH | 23.2 | 46.6 | 50.4 | Example 1 |
| | 20°C, 60% RH | 24.4 | 48.5 | 52.3 | Example 12 |
| | 40°C, 60% RH | 25.1 | 47.4 | 51.8 | Example 13 |

From the results in Table 1, it was found that the $CO_2$-fixing ceramics of Examples 1 to 3 had a higher carbonation rate than that of Comparative Example 1.

From the results in Table 2, it was found that the effect of the carbonation was increased in a case where the disaccharides were added. In particular, the effect of carbonation was further increased in a case where trehalose was added.

From the results in Table 3, a favorable carbonation rate was obtained by setting the carbonation to equal to or lower than 75°C or lower and/or equal to or more than 50 %RH.

A $CO_2$-fixed material in which $CO_2$ is fixed is obtained by performing a carbonation treatment using the $CO_2$-fixing ceramics of Examples 1 to 3 under a condition of relatively low temperature and/or relatively high humidity.

Such a $CO_2$-fixed material can also be used as, for example, a cement additive in the civil engineering and architecture fields, and can be effectively used as it is as a material such as aggregate for mortar or concrete, a pavement material, an embankment material, and a backfill material, or as a filler for a paint, an ink, or rubber.

Priority is claimed on Japanese Patent Application No. 2022-019300, filed February 10, 2022.

**Claims**

**1.**　A $CO_2$-fixing ceramic comprising:

a $\gamma$-crystalline phase composed of $\gamma$-2CaO·SiO$_2$ ($\gamma$-C$_2$S); and
2CaO·Al$_2$O$_3$·SiO$_2$ (C$_2$AS),
wherein a content of the $\gamma$-C$_2$S is equal to or more than 30% by mass and equal to or less than 98% by mass with respect to 100% by mass of the CO$_2$-fixing ceramic; and
wherein a content of the C$_2$AS is equal to or more than 0.5% by mass and equal to or less than 50% by mass with respect to 100% by mass of the $\gamma$-C$_2$S.

2. The CO$_2$-fixing ceramic according to Claim 1, further comprising:

   CaO·2Al$_2$O$_3$ (CA$_2$).

3. The CO$_2$-fixing ceramic according to Claim 1 or 2,
   wherein the CO$_2$-fixing ceramic contains a heterophase existing in the $\gamma$-crystalline phase, and the C$_2$AS is contained in the heterophase.

4. The CO$_2$-fixing ceramic according to Claim 3,
   wherein Al$_2$O$_3$ is not contained in the $\gamma$-crystalline phase.

5. The CO$_2$-fixing ceramic according to any one of Claims 1 to 4, further comprising:
   a $\beta$-crystalline phase composed of $\beta$-2CaO·SiO$_2$ ($\beta$-C$_2$S).

6. The CO$_2$-fixing ceramic according to Claim 5,
   wherein Al$_2$O$_3$ is contained in the $\beta$-crystalline phase.

7. The CO$_2$-fixing ceramic according to Claim 5 or 6,
   wherein a content of the $\beta$-C$_2$S is equal to or more than 1.0% by mass and equal to or less than 50% by mass with respect to 100% by mass of the $\gamma$-C$_2$S.

8. The CO$_2$-fixing ceramic according to any one of Claims 1 to 7, further comprising:
   disaccharides.

9. The CO$_2$-fixing ceramic according to Claim 8,
   wherein a content of the disaccharides in 100 parts by mass of the CO$_2$-fixing ceramic is equal to or more than 0.5 parts by mass and equal to or less than 10 parts by mass.

10. The CO$_2$-fixing ceramic according to Claim 8 or 9,
    wherein the disaccharides include trehalose.

11. The CO$_2$-fixing ceramic according to any one of Claims 1 to 10,
    wherein the CO$_2$-fixing ceramic is in a powder form.

12. A method for producing a CO$_2$-fixed material, comprising:
    a step of performing a carbonation treatment of the CO$_2$-fixing ceramic according to any one of Claims 1 to 11 under a condition of lower than 75°C and/or equal to or more than 50 %RH.

**Patentansprüche**

1. CO$_2$-Fixierkeramik, umfassend:

   eine $\gamma$-kristalline Phase, bestehend aus $\gamma$-2CaO·SiO$_2$ ($\gamma$-C$_2$S); und
   2CaO·Al$_2$O$_3$·SiO$_2$ (C$_2$AS),
   wobei der Gehalt an $\gamma$-C$_2$S gleich oder mehr als 30 Masse-% und gleich oder weniger als 98 Masse-% bezogen auf 100 Masse-% der CO$_2$-Fixierkeramik beträgt; und
   wobei ein Gehalt an C$_2$AS gleich oder mehr als 0,5 Masse-% und gleich oder weniger als 50 Masse-% bezogen auf 100 Masse-% des $\gamma$-C$_2$S beträgt.

**2.** CO$_2$-Fixierkeramik nach Anspruch 1, ferner umfassend:

CaO·2Al$_2$O$_3$ (CA$_2$).

**3.** CO$_2$-Fixierkeramik nach Anspruch 1 oder 2,
wobei die CO$_2$-Fixierkeramik eine Heterophase enthält, die in der γ-kristallinen Phase vorliegt, und das C$_2$AS in der Heterophase enthalten ist.

**4.** CO$_2$-Fixierkeramik nach Anspruch 3,
wobei Al$_2$O$_3$ nicht in der γ-kristallinen Phase enthalten ist.

**5.** CO$_2$-Fixierkeramik nach einem der Ansprüche 1 bis 4, ferner umfassend:
eine β-kristalline Phase, bestehend aus β-2CaO·SiO$_2$ (β-C$_2$S).

**6.** CO$_2$-Fixierkeramik nach Anspruch 5,
wobei Al$_2$O$_3$ in der β-kristallinen Phase enthalten ist.

**7.** CO$_2$-Fixierkeramik nach Anspruch 5 oder 6,
wobei ein Gehalt an β-C$_2$S gleich oder mehr als 1,0 Masse-% und gleich oder weniger als 50 Masse-% bezogen auf 100 Masse-% des γ-C$_2$S beträgt.

**8.** CO$_2$-Fixierkeramik nach einem der Ansprüche 1 bis 7, ferner umfassend:
Disaccharide.

**9.** CO$_2$-Fixierkeramik nach Anspruch 8,
wobei ein Gehalt der Disaccharide in 100 Masseteilen der CO$_2$-Fixierkeramik gleich oder mehr als 0,5 Masseteile und gleich oder weniger als 10 Masseteile beträgt.

**10.** CO$_2$-Fixierkeramik nach Anspruch 8 oder 9,
wobei die Disaccharide Trehalose beinhalten.

**11.** CO$_2$-Fixierkeramik nach einem der Ansprüche 1 bis 10,
wobei die CO$_2$-Fixierkeramik in einer Pulverform vorliegt.

**12.** Verfahren zum Herstellen eines CO$_2$-fixierten Materials, umfassend:
einen Schritt zum Durchführen einer Karbonatisierungsbehandlung der CO$_2$-Fixierkeramik nach einem der Ansprüche 1 bis 11 unter einer Bedingung von weniger als 75 °C und/oder gleich oder mehr als 50 % RH.

**Revendications**

**1.** Céramique de fixation de CO$_2$, comprenant :

une phase γ-cristalline composée de γ-2CaO·SiO$_2$ (γ-C$_2$S) ; et
2CaO·Al$_2$O$_3$·SiO$_2$ (C$_2$AS),
dans laquelle une teneur en γ-C$_2$S est égale ou supérieure à 30 % en masse et égale ou inférieure à 98 % en masse par rapport à 100 % en masse de la céramique de fixation de CO$_2$; et
dans laquelle une teneur en C$_2$AS est égale ou supérieure à 0,5 % en masse et égale ou inférieure à 50 % en masse par rapport à 100 % en masse du γ-C$_2$S.

**2.** Céramique de fixation de CO$_2$ selon la revendication 1, comprenant :

CaO·2Al$_2$O$_3$ (CA$_2$).

**3.** Céramique de fixation de CO$_2$ selon la revendication 1 ou 2,
dans laquelle la céramique de fixation de CO$_2$ contient une hétérophase existant dans la phase γ-cristalline, et le C$_2$AS

est contenu dans l'hétérophase.

**4.** Céramique de fixation de $CO_2$ selon la revendication 3,
dans laquelle $Al_2O_3$ n'est pas contenu dans la phase $\gamma$-cristalline.

**5.** Céramique de fixation de $CO_2$ selon l'une quelconque des revendications 1 à 4, comprenant en outre :
une phase $\beta$-cristalline composée de $\beta$-$2CaO \cdot SiO_2$ ($\beta$-$C_2S$).

**6.** Céramique de fixation de $CO_2$ selon la revendication 5,
dans laquelle $Al_2O_3$ est contenu dans la phase $\beta$-cristalline.

**7.** Céramique de fixation de $CO_2$ selon la revendication 5 ou 6,
dans laquelle une teneur en $\beta$-$C_2S$ est égale ou supérieure à 1,0 % en masse et égale ou inférieure à 50 % en masse
par rapport à 100 % en masse du $\gamma$-$C_2S$.

**8.** Céramique de fixation de $CO_2$ selon l'une quelconque des revendications 1 à 7, comprenant en outre :
des disaccharides.

**9.** Céramique de fixation de $CO_2$ selon la revendication 8,
dans laquelle une teneur en disaccharides dans 100 parties en masse de la céramique de fixation de $CO_2$ est égale ou
supérieure à 0,5 partie en masse et égale ou inférieure à 10 parties en masse.

**10.** Céramique de fixation de $CO_2$ selon la revendication 8 ou 9,
dans laquelle les disaccharides comprennent du tréhalose.

**11.** Céramique de fixation de $CO_2$ selon l'une quelconque des revendications 1 à 10,
dans laquelle la céramique de fixation de $CO_2$ est sous forme de poudre.

**12.** Procédé de production d'un matériau de fixation de $CO_2$, comprenant :
une étape consistant à effectuer un traitement de carbonatation de la céramique de fixation de $CO_2$ selon l'une
quelconque des revendications 1 à 11 dans une condition étant inférieure à 75°C et/ou égale ou supérieure à 50 %RH.

[Fig.1]

[Fig.2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020015659 A
- JP 2019058091 A
- WO 2021257757 A1
- EP 3177578 B1
- JP 2022019300 A